# EUROPÄISCHE PATENTANMELDUNG

(11) **EP 0 650 040 A2**
(43) Veröffentlichungstag der Anmeldung: **26.04.1995**
(21) Anmeldenummer: 94116389.1
(22) Anmeldetag: 18.10.1994
(51) Int. Cl.: G01L 9/06, G01L 19/08

(54) **Vorrichtung zur elektronischen Bestimmung von Drücken und Druckdifferenzen in einem fluiden Medium**

(30) Priorität: 20.10.1993 DE 4335838
(71) Anmelder: IFAS Ingenieurgesellschaft für angewandte Sensorik und Prozessautomatisation mbH, D-81737 München (DE)
(72) Erfinder: Aichinger, Helmuth, D-81737 München (DE); Förner, Johannes, D-81539 München (DE); Schramm, Hans-Karl, D-80689 München (DE)

(57) **Zusammenfassung**

Mit der erfindungsgemäßen Vorrichtung gelingt es, ein einfaches, preiswertes und störungsunanfälliges Gerät bereitzustellen, welches in ein handliches Gehäuse eingebaut werden kann und das über einen längeren Zeitraum ohne Austausch oder Nachladen einer internen Betriebsstromversorgung zuverlässig arbeitet. Durch die spezielle Anordnung und Ausbildung der elektronischen Komponenten der erfindungsgemäßen Vorrichtung wird eine aufwendige temperaturabhängige Korrektur der ermittelten Druckmeßwerte vermieden. Mittels eines Speichers können bereits herstellerseitig eine Vielzahl von anwendungsspezifischen Steuer- und Meßprogrammen implementiert werden, so daß die erfindungsgemäße Vorrichtung universell und ohne Eingriffe und aufwendige Manipulationen einsetzbar ist.

Die erfindungsgemäße Vorrichtung kann sofort mit einer zu prüfenden Rohrleitung oder einem hinsichtlich seiner Dichtheit zu untersuchenden Rohrleitungssystem verbunden werden, ohne daß vorab eine über eine Zeit andauernde Inbetriebnahme zur Selbstkalibrierung oder Umgebungstemperaturerfassung erforderlich wird.

## Beschreibung

Die Erfindung betrifft eine Vorrichtung zur elektronischen Bestimmung von Drücken und Druckdifferenzen in einem fluiden Medium gemäß dem Oberbegriff des Patentanspruches 1.

Bei der Errichtung und Wartung von Rohrleitungen und Rohrleitungssystemen, insbesondere gasführenden Systemen, ist es erforderlich, vor der Inbetriebnahme das betreffende System einer Belastungsprobe und Dichtheitsprüfung zu unterziehen.

Eine Dichtheitsprüfung ist auch dann erforderlich, wenn Leitungsanlagen, die vorübergehend außer Betrieb genommen worden sind, z.B. für die Instandhaltung oder Änderung der Gasanlage, wieder ihrem Verwendungszweck zugeführt werden. Die vorstehend erwähnten Prüfungen werden in der Regel zweistufig durchgeführt. In einer ersten Stufe wird eine Vorprüfung im Sinne einer Belastungsprobe vorgenommen, wobei das Rohrleitungssystem mit Luft oder inertem Gas gefüllt wird. Ein durch die Füllung eingestellter Prüfdruck darf während einer vorgegebenen Prüfdauer nicht abfallen.

Bei einem zweiten Prüfschritt, der sogenannten Hauptprüfung erstreckt sich die Dichtheitsuntersuchung auf die Leitung einschließlich aller Armaturen. Auch dort wird das System mit Luft oder einem inerten Gas aber geringerem Prüfdruck gefüllt. Nach einem erforderlichen Temperaturausgleich darf der eingestellte Prüfdruck während der anschließenden Prüfdauer von mindestens 10 Minuten nicht abfallen. Die verwendete Meßvorrichtung muß daher so genau anzeigen, daß ein Druckabfall von ≧ 0,1 mbar erkennbar ist.

Aufgrund der Prüferfordernisse, insbesondere der zu bestimmenden geringen Druckdifferenzen und einer vorgegebenen einzuhaltenden Meßdauer, ist die Verwendung bekannter nach dem Verdrängungsprinzip ausgebildeter mechanisch-pneumatischer Druckmeßgeräte außerordentlich kompliziert und im Ergebnis unzureichend.

Aus dem deutschen Gebrauchsmuster G 90 06 273.6 ist ein Gasdruck-Prüfgerät für Gasanlagen bekannt, welches einen Relativdrucksensor verwendet, der ein druckproportionales elektrisches Ausgangssignal liefert. Dieser Drucksensor steht mit einer Auswerteschaltung in Verbindung, welche einen Mikroprozessor, einen Daten-Lesespeicher für Korrekturwerte und einen Uhrbaustein aufweist. Die Meßwerte werden dann mit einer herkömmlichen Anzeigeeinheit in alphanumerischer Form dargestellt.

Das im Gebrauchsmuster G 90 06 273.6 vorgeschlagene Gasdruck-Prüfgerät soll selbsttätig kalibrierend sein und Störeinflüsse aufgrund unterschiedlicher Temperaturen des Prüfgases sollen vermieden werden.

Aus diesem Grunde wird ein Temperaturfühler in einer Druckleitung unmittelbar vor dem Drucksensor angeordnet, so daß die aktuelle Gastemperatur bestimmt und in die Berechnung von Meß-Korrekturwerten einbezogen werden kann. Es ist ersichtlich, daß hierbei ein außerordentlich hoher Aufwand erforderlich ist, da für ein breites Temperaturspektrum eine Vielzahl von Korrekturwerten in dem Daten-Lesespeicher abgelegt werden müssen. Die abgespeicherten Daten sind dann während des eigentlichen Meß- und Prüfvorganges mit Hilfe des Mikroprozessors durch geeignete Rechenoperationen zu bestimmen. Hieraus ergibt sich jedoch ein weiterer Nachteil, der darin besteht, daß der Rechenaufwand mit Hilfe des Mikroprozessors stromintensiv ist, so daß eine Betriebsstromversorgung, nämlich ein Akkumulator oder eine Batterie, schnell erschöpft sind. Bei den geforderten langen Prüfzeiten wird ein Batteriewechsel erforderlich und es müssen ggfs. laufende Messungen unterbrochen werden.

Der Temperaturfühler gemäß G 90 06 273.6 ist in der internen Druckleitung, welche zum Drucksensor führt, angeordnet. Der Temperatursensor soll die Gastemperatur der Gassäule bestimmen. Es ist jedoch offensichtlich, daß der Temperatursensor aufgrund der Tatsache, daß keine Gasströmung am Ort des Drucksensors vorliegt, mehr oder weniger stark von der Umgebungstemperatur beeinflußt wird, wodurch die Messung der Gastemperatur verfälscht und falsche Korrekturwerte zur Bestimmung der Druckmeßwerte herangezogen werden.

Bei dem bekannten Gasdruck-Prüfgerät soll zwar ohne Druckbeaufschlagung nach dem Einschalten des Gerätes eine starke Temperaturänderung, die die Messung des Drucks verfälschen kann, feststellbar sein, wobei dieser Fall denkbar ist, wenn das Prüfgerät von einem erhitzten Fahrzeuginnenraum in einen kühleren Keller gebracht wird. Um diese Temperaturänderungen feststellen zu können, muß das bekannte Prüfgerät jedoch in Funktion gesetzt sein, woraus ein Stromverbrauch aus der internen Betriebsstromversorgung resultiert, wodurch sich die für die eigentliche Messung zur Verfügung stehende Energiemenge verringert.

Aus der DE 31 44 321 A1 ist eine Anordnung bekannt, mit deren Hilfe der Energieverbrauch einer Quarzuhr in Kombination mit einer Funkuhr dadurch reduziert werden kann, daß die Funkuhr nur kurzzeitig eingeschaltet wird. Hierfür wird die schaltungstechnische Anordnung in zwei, vorzugsweise integrierte Schaltungsteile derart zerlegt, daß ein Teil die stets aktiven Schaltungen und der andere Teil die meist in Ruhestellung befindlichen Schaltungskomponenten umfaßt. Der stets aktive Teil schaltet dann die Funkuhrsignalverarbeitung nur dann ein, wenn eine vorgegebene Abweichung der angezeigten Zeit von der tatsächlichen Zeit festgestellt wurde.

Aus der GB 22 02 952 A ist eine Druckmeßvorrichtung bekannt, bei welcher ein Drucksensor über eine Verstärkungsschaltung mit einem Analog/Digital-Wandler in Verbindung steht, der wiederum auf einen zentralen Bus eines Mikroprozessors führt. Der Mikroprozessor enthält mindestens einen Speicher zur Aufnahme von Meß- und Steuerprogrammen. Die Problematik des Energieverbrauches des Mikroprozessors und weiterer schaltungstechnischer Komponenten und der sich hieraus ergebenden eingeschränkten Betriebsdauer beim Betreiben der Vorrichtung mittels Batterien oder Akkumulatoren ist dort nicht angesprochen.

Es ist daher Aufgabe der Erfindung, eine Vorrichtung zur elektronischen Bestimmung von Drücken und Druckdifferenzen in einem fluiden Medium anzugeben, welche mit minimalem Energieverbrauch einer internen Betriebsstromversorgung über einen langen Zeitraum Messungen in hoher Genauigkeit und mit einfachen Mitteln auf verschiedene Anwendungsgebiete einstellbar ermöglicht.

Die Lösung der Aufgabe der Erfindung erfolgt mit den Merkmalen des Patentanspruches 1, wobei die Unteransprüche mindestens zweckmäßige Ausgestaltungen und Weiterbildungen der Erfindung zeigen.

Der Grundgedanke der Erfindung besteht einerseits darin, bei der Vorrichtung zur elektronischen Bestimmung von Drücken und Druckdifferenzen in einem fluiden Medium eine Freigabe energieverbrauchender Komponenten erst dann zu erreichen, wenn eine bestimmte vorgegebene Umgebungstemperatur der Vorrichtung festgestellt wurde. Hierzu wird zweckmäßigerweise ein Umgebungstemperatur-Sensor in Form einer Diode oder eines Transistors benutzt, über dessen Kennlinie des PN-Überganges eine Temperaturbestimmung möglich ist. Alle weiteren schaltungstechnischen Komponenten der Vorrichtung zur Druckbestimmung werden über einen erfindungsgemäß eingesetzten Signalprozessor erst beim vorerwähnten Erreichen einer bestimmten Temperatur aktiviert. Hierdurch wird vermieden, daß die gesamte Vorrichtung zur Druckbestimmung vorzeitig in den Meßzustand mit resultierendem hohen Stromverbrauch versetzt wird. Andererseits wird aber sichergestellt, daß der Bediener der Druckbestimmungsvorrichtung nicht unnötig eine vermeintlich erforderliche Wartezeit einhält und dadurch in seiner Produktivität und Effektivität eingeschränkt ist.

Die Auswerteschaltung der Vorrichtung zur Druckbestimmung umfaßt den bereits genannten digitalen Signalprozessor, welcher mit einem externen Speicher verbunden ist. Der externe Speicher dient der Aufnahme anwendungsspezifischer Steuer- und Meßprogramme, so daß vom Bediener in leichter Weise über die Eingabeeinheit eine Vorortumstellung und -anpassung möglich ist.

Um Meßungenauigkeiten eines vorteilhafterweise eingesetzten piezoresistiven Drucksensors zu minimieren, wird dieser über eine Konstantstromquelle betrieben. Eine diskrete Bestimmung der Temperatur des fluiden Mediums, das mit dem Drucksensor in Berührung kommt, kann daher entfallen.

Ein weiterer wesentlicher Gedanke der Erfindung liegt darin, daß über Steuereingänge des digitalen Signalproessors eine Aktivierung bzw. Deaktivierung der einzelnen Komponenten der Druckbestimmungsvorrichtung nur dann erfolgt, wenn diese für die Messung oder die Auswertung der Meßwerte tatsächlich benötigt werden. Durch die Einstellung derartiger unterschiedlicher Betriebsmodi erfolgt eine weitere Minimierung des Energieverbrauches aus der internen Betriebsstromversorgung. Die erfindungsgemäße Vorrichtung kann daher über einen langen Zeitraum ohne Austausch der Stromversorgung, z.B. eines Akkumulators oder einer Batterie, ununterbrochen eingesetzt werden.

Es liegt ebenfalls im Sinne der Erfindung, daß bestimmte Betriebsmodi, das Über- oder Unterschreiten voreinstellbarer Druckwerte oder der Beginn oder das Ende einer vorgegebenen Prüfzeit akustisch signalisiert werden.

Die Erfindung soll nunmehr anhand einer Figur und eines Ausführungsbeispiels näher erläutert werden.

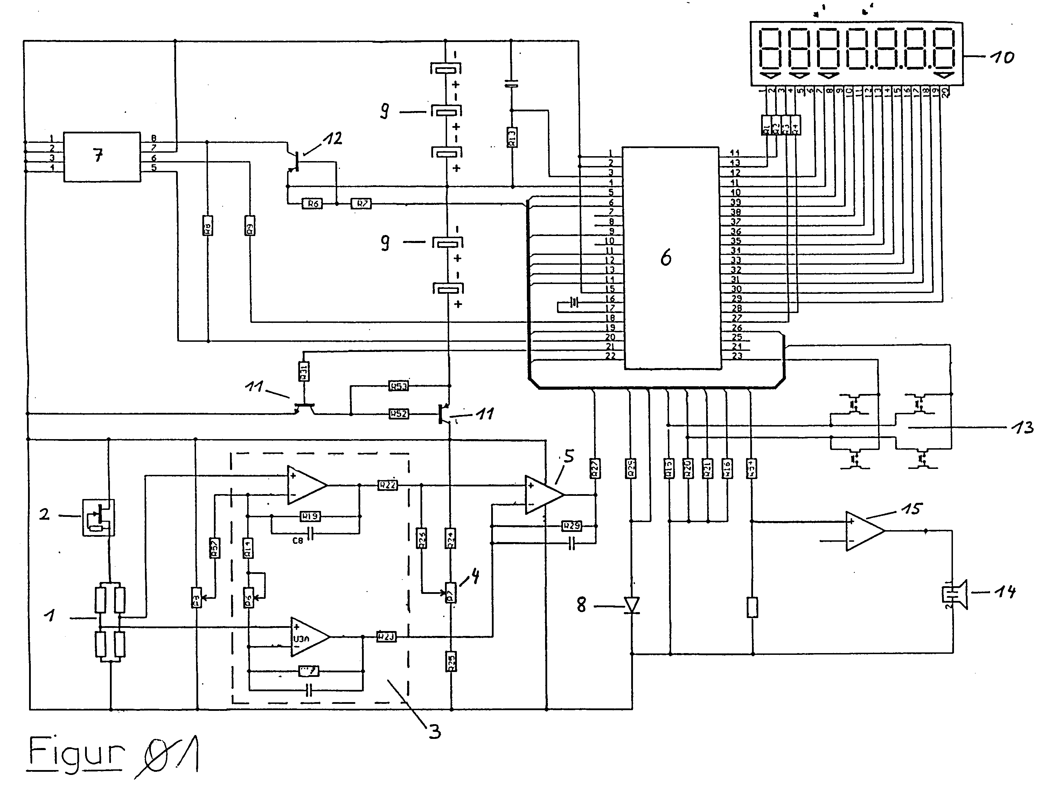

Die Figur zeigt hierbei den prinzipiellen Aufbau der Vorrichtung zur elektronischen Bestimmung von Drücken und Druckdifferenzen in einem fluiden Medium.

Bei der erfindungsgemäßen Vorrichtung wird beispielsweise ein piezoresistiver Drucksensor 1 verwendet, wobei die Piezowiderstände in einer Brückenschaltung angeordnet sind. Der Drucksensor wird über eine Konstantstromquelle 2 mit Konstantstrom versorgt, so daß eine einheitliche Meßreferenz und eine hohe Meßgenauigkeit bei der Umwandlung von Druckmeßwerten in elektrische Signale gegeben ist. Die Brückenschaltung des Drucksensors 1 gelangt auf einen Instrumentenverstärker 3, dessen Ausgang über einen Trimmregler zur Offsetkorrektur 4 mit einem Driftkorrektur-Operationsverstärker 5 in Verbindung steht. Der Ausgang des Driftkorrektur-Operationsverstärkers 5 steht mit einem analogen Eingang eines Signalprozessors 6 in Verbindung.

Zur Erhöhung der Auflösung der Druckmeßwerte können der Instrumentenverstärker 3 und der nachgeschaltete Driftkorrektur-Operationsverstärker 6 derart umschaltbar ausgebildet sein, daß unter Beachtung der Wandlungsbreite des Analog-Digital-Wandlers des Signalprozessors 6 eine meßbereichspezifische, einstellbare Auflösung gewährleistet ist.

Der Meßbereich der erfindungsgemäßen Vorrichtung kann beispielsweise in einen ersten Bereich von 0 - 120 mbar bei einer Auflösung von 0,03 mbar und in einen zweiten Teilbereich von 80 - 120 mbar mit einer Auflösung von 0,01 mbar aufgespalten werden. Alternativ können eine Vielzahl von umschaltbaren Teilmeßbereichen z.B. von 0 - 40 mbar, 40 - 80 mbar, 80 - 120 mbar mit dem Ziel einer maximalen Auflösung von z.B. 0,01 mbar in jedem Teilbereich ausgebildet sein.

Der digitale Signalprozessor umfaßt einen nicht dargestellten RAM, eine Arithmetiklogikeinheit ALU, mindestens eine serielle Schnittstelle, einen Timer, einen Analog-Digital-Wandler, einen Anzeigentreiber und mehrere Steuerausgänge.

Des weiteren steht der digitale Signalprozessor 6 mit einem externen Speicher 7, welcher im gezeigten Beispiel ein EEPROM ist, in Verbindung. Dieser externe Speicher 7 dient der Aufnahme von anwendungsspezifischen Steuer- und Meßprogrammen, so daß ein universeller Einsatz der erfindungsgemäßen Vorrichtung möglich ist. Ein Umgebungstemperatursensor 8, zweckmäßigerweise eine Halbleiterdiode oder ein Transistor, ist räumlich vom Drucksensor 1 innerhalb eines nicht gezeigten Gehäuses der erfindungsgemäßen Vorrichtung angeordnet.

Dieser Umgebungstemperatursensor 8 verbindet einen schaltbaren Stromversorgungseingang des digitalen Signalprozessors 6 mit der internen Betriebsstromversorgung 9. Diese interne Betriebsstromversorgung 9 kann aus Batterien oder wiederaufladbaren Akkumulatoren bestehen.

Über den internen Anzeigentreiber des digitalen Signalprozessors 6 wird eine Anzeige 10 zur numerischen Darstellung der Meßwerte bzw. zur Informationsausgabe betrieben. Aus Gründen der Minimierung des Stromverbrauches wird als Anzeige zweckmäßigerweise ein alphanumerisches LCD-Display eingesetzt.

Eine Aktivierung des Drucksensors 1, der Konstantstromquelle 2, des Instrumentenverstärkers 3 sowie des diesem nachgeschalteten Driftkorrektur-Operationsverstärkers 5 erfolgt durch die Aktivierung eines Steuerausganges des digitalen Signalprozessors 6 mit Hilfe der Schaltmittel 11. Als Schaltmittel 11 sind im gezeigten Beispiel gemäß der Figur Transistoren eingesetzt, deren Emitterkollektorstrecke beim Anliegen eines Impulses aus dem Steuerausgang des digitalen Signalprozessors 6 in den leitfähigen Zustand versetzt wird.

Eine Aktivierung des externen Speichers 7 erfolgt ebenfalls nur dann, wenn über einen weiteren Steuerausgang des digitalen Signalprozessors ein Schaltmittel 12 das Ein- und Auslesen von Daten aus dem externen Speicher 7 freigibt bzw. anfordert. Über eine Eingabeeinheit 13, welche beispielsweise als Folienflachtastatur ausgebildet werden kann, erfolgt eine Inbetriebnahme der erfindungsgemäßen Vorrichtung bzw. das Aktivieren anwendungsspezifischer Programme aus dem externen Speicher 7. Ein Piezosummer 14 zur Erzeugung akustischer Warnsignale wird über einen Treiber 15 entsprechend der im RAM des digitalen Signalprozessors 6 abgelegten Steuersoftware z.B. beim Überschreiten eines vorgegebenen Druckabfalls oder -anstieges aktiviert.

Dadurch, daß mit Hilfe des Umgebungstemperatursensors 8 eine Inbetriebnahme der erfindungsgemäßen Vorrichtung nur dann erfolgt, wenn ein voreinstellbarer Temperaturwert erreicht wurde, sind einerseits Meßfehler aufgrund stark schwankender Umgebungstemperaturen ausgeschlossen und andererseits wird ein minimaler Stromverbrauch aus der internen Betriebsstromversorgung 9 erreicht. Der Einsatz des digitalen Signalprozessors 6 und die Festlegung des im RAM abgelegten Steuerprogramms erfolgt im Zusammenwirken mit den Steuerausgängen des Signalprozessors 6 unter dem Ziel, alle anderen stromverbrauchenden Komponenten, wie z.B. die Konstantstromquelle 2, den Drucksensor 1 und den Instrumentenverstärker 3, nur dann in Betrieb zu nehmen, wenn dies für die momentane Erfassung eines Meßwertes erforderlich ist. Hierdurch kann auch in der Zeit, welche für die Berechnung eines Meßwertes mit Hilfe des Signalprozessors erforderlich ist, der Drucksensor 1 und die nachgeschaltete Elektronik außer Betrieb gesetzt werden, so daß sich eine verlängerte Einsatzdauer durch minimale Belastung der internen Betriebsstromversorgung 9 ergibt.

Der digitale Signalprozessor 6 steuert die Anzeige 10 derart, daß gleichzeitig oder abwechselnd ein Meßzeitablauf und Druckmeßwerte dargestellt werden können.

Ebenso wird über den internen Timer des digitalen Signalprozessors 6 ein Meßablauf nach Start des Meßvorganges zeitlich determiniert und in vorgebbaren Schritten unterbrochen bzw. nach Ablauf einer Prüf-Meßzeit beendet.

Mit einer nach der Erfindung realisierten Vorrichtung, welche als elektronisches Meßgerät zur Bestimmung von Kleinstdrücken und Druckdifferenzen insbesondere zur Dichtheitsprüfung und Leckmengenbestimmung von Rohrleitungen eingesetzt wird, lassen sich Meßwerte in einem Bereich von 0 bis beispielsweise 160 mbar und eine Auflösung bis hin zu 0,01 mbar erfassen. Der Arbeitstemperaturbereich der realisierten erfindungsgemäßen Vorrichtung liegt zwischen 0° und 40°C. Durch die im externen Speicher 7 abgelegte Anwendungssoftware kann beispielsweise eine Betriebsweise der erfindungsgemäßen Vorrichtung eingestellt werden, welche eine automatische Umschaltung der Vorrichtung zum Erfassen von Meßwerten dann ermöglicht, wenn ein eingestellter Prüfdruckwert bei der Dichteprüfung von Gasleitungen über einen bestimmten Zeitraum stabil bleibt. Hierdurch wird vermieden, daß der Bediener des Gerätes zunächst die einlaufenden Druckmeßwerte über einen längeren Zeitraum beobachtet und bei annäherender Konstanz dieser das Gerät in den Zustand zur Bestimmung der Dichtheit über einen längeren Zeitraum überführt. Durch diese Maßnahme wird sichergestellt, daß ein sich in einem Rohrleitungssystem ausdehnendes, vormals bezogen auf die Umgebungstemperatur kühleres Prüfgas zunächst zu einem Druckanstieg führt bzw. durch die Druckerhöhung real vorhandene Undichtheiten nicht erkannt werden.

Alles in allem gelingt es mit der erfindungsgemäßen Vorrichtung, ein einfaches, preiswertes, störunanfälliges elektronisches Gerät bereitzustellen, welches in ein handliches Gehäuse eingebaut werden kann und das über einen längeren Zeitraum ohne Austausch oder Nachladen einer internen Betriebsstromversorgung zuverlässig arbeitet. Durch die spezielle Anordnung und Ausbildung der elektronischen Komponenten der erfindungsgemäßen Vorrichtung wird eine aufwendige temperaturabhängige Korrektur der ermittelten Druckmeßwerte vermieden. Mittels eines Speichers können bereits herstellerseitig eine Vielzahl von anwendungsspezifischen Steuer- und Meßprogrammen implementiert werden, so daß die erfindungsgemäße Vorrichtung universell und ohne Eingriffe und aufwendige Manipulationen einsetzbar ist.

Die erfindungsgemäße Vorrichtung kann sofort mit einer zu prüfenden Rohrleitung oder einem hinsichtlich seiner Dichtheit zu untersuchenden Rohrleitungssystem verbunden werden, ohne daß vorab eine über eine Zeit andauernde Inbetriebnahme zur Selbstkalibrierung oder Umgebungstemperaturerfassung erforderlich wird.

## Patentansprüche

1. Vorrichtung zur elektronischen Bestimmung von Drücken und Druckdifferenzen in einem fluiden Medium, umfassend einen Drucksensor (1) zur Umwandlung von Druckmeßwerten in elektrische Signale, wobei der Drucksensor von dem fluiden Medium beaufschlagt wird,
eine Auswerteschaltung zur Bewertung der elektrischen Signale des Drucksensors (1), eine interne Betriebsstromversorgung (9), eine Eingabeeinheit (13) und eine Anzeige (10) zur Darstellung der Druckmeßwerte, die mit der Auswerteschaltung verbunden ist,
**dadurch gekennzeichnet**, daß
- die Auswerteschaltung einen digitalen Signalprozessor (6) umfaßt, welcher mit einem Speicher (7) zur Aufnahme an wendungsspezifischer Steuer- und Meßprogramme verbunden ist, wobei der digitale Signalprozessor (6) die Stromversorgung des Speichers (7) nur dann aktiviert, wenn ein Programmzugriff erforderlich ist;
- einen Umgebungstemperatursensor (8), der zwischen einem Eingang des digitalen Signalprozessors (6) und der Betriebsstromversorgung (9) angeordnet ist und welcher erst beim Erreichen einer vorgegebenen Temperatur den digitalen Signalprozessor (6) und weitere energieverbrauchende Komponenten der Vorrichtung in Betrieb setzt, wobei der Umgebungstemperatursensor (8) vom Drucksensor (1) räumlich entfernt ist, und daß
- der Drucksensor (1) über einen Instrumentenverstärker (3) mit nachgeschaltetem Driftkorrektur-Operationsverstärker (5) mit einem analogen Eingang des digitalen Signalprozessors (6) verbunden ist.

2. Vorrichtung nach Anspruch 1,
**dadurch gekennzeichnet**, daß
der Umgebungstemperatursensor (8) eine innerhalb eines Gehäuses der Vorrichtung angeordnete Diode oder ein Transistor ist.

3. Vorrichtung nach Anspruch 1,
**dadurch gekennzeichnet**, daß
der Speicher (7) ein EEPROM ist.

4. Vorrichtung nach Anspruch 1,
**dadurch gekennzeichnet**, daß
der digitale Signalprozessor (6) einen RAM, eine Arithmetik-Logik-Einheit (ALU), mindestens eine serielle Schnittstelle, einen Timer, einen Analog/Digital-Wandler, einen Anzeigentreiber und Steuereingänge aufweist, wobei die vorgenannten Baugruppen auf einem Signalprozessorchip integriert sind.

5. Vorrichtung nach Anspruch 1 und 4,
**dadurch gekennzeichnet**, daß
der Speicher (7) über die mindestens eine serielle Schnittstelle mit dem digitalen Signalprozessor (6) verbunden ist.

6. Vorrichtung nach Anspruch 1, 3 oder 4,
**dadurch gekennzeichnet**, daß
über die Steuerausgänge des digitalen Signalprozessors (6) und Schaltmittel (11, 12) Ruhe- und Aktivitätsmodi, welche im RAM und/oder Speicher (7) abgelegt sind, ein Aktivieren und Deaktivieren mindestens des Speichers (7), des Drucksensors (1), des Instrumentenverstärkers (3), des Driftkorrektur-Operationsverstärkers (5) und ggfs. der Anzeige (10) erfolgt.

7. Vorrichtung nach einem der Ansprüche 1 bis 6,
**gekennzeichnet durch**
Verwendung zur Dichtheitsprüfung und Leckmengenfeststellung von Rohrleitungen und Rohrleitungssystemen, insbesondere gasführenden Systemen.
